# EUROPEAN PATENT APPLICATION

(11) **EP 4 567 389 A1**
(43) Date of publication of application: **11.06.2025**
(21) Application number: 24210789.4
(22) Date of filing: 05.11.2024
(51) Int. Cl.: G01K 1/14, H01M 10/42, H01M 10/48, H01M 10/637, H01M 10/647, H01M 10/65, H01M 50/204, H01M 50/209, H01M 50/28, H01M 50/289, H01M 50/298, H01M 50/507, H01M 50/519, H01M 50/569, H01M 50/284

(54) **BUSBAR HOLDER ASSEMBLY, BATTERY MODULE INCLUDING SAME, AND METHOD OF MANUFACTURING SAME**

(30) Priority: 05.12.2023 KR 20230174156
(71) Applicant: Samsung SDI Co., Ltd., Giheung-gu Yongin-si, Gyeonggi-do 17084 (KR)
(72) Inventor: Kwon, Young-Hwan, 17084 Yongin-si, Gyeonggi-do (KR); Moon, Soodeok, 17084 Yongin-si, Gyeonggi-do (KR)
(74) Representative: Gulde & Partner

(57) **Abstract**

A battery module includes battery cells, busbars electrically connecting the battery cells, a circuit board including a temperature sensor assembly, and electrically connected to the busbars, and a busbar holder for supporting the busbars, defining a receiving hole for receiving the temperature sensor assembly, and including a first fastening portion (30) adjacent to the receiving hole, wherein the temperature sensor assembly includes a temperature sensor (544) configured to measure a temperature of at least one of the battery cells, a temperature sensor cover (546) including a second fastening portion (610) configured to be fastened to the first fastening portion, and an elastic member (542) between the circuit board and the temperature sensor cover.

## Description

### BACKGROUND

### 1. Field

The present disclosure relates to a busbar holder assembly including a temperature sensor cover, a battery module including the same, and a method of manufacturing the same.

### 2. Description of the Related Art

Unlike primary batteries, which are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and may contain information that does not constitute related (or prior) art.

### SUMMARY

The present disclosure provides a busbar holder assembly including a temperature sensor cover, a battery module including the same, and a method of manufacturing the same.

These and other aspects of the present disclosure will be described in or will be apparent from the following description of embodiments of the present disclosure.

The invention is defined by the appended claims.

A battery module according to one or more embodiments of the present disclosure includes battery cells, busbars electrically connecting the battery cells, a circuit board including a temperature sensor assembly, and electrically connected to the busbars, and a busbar holder for supporting the busbars, defining a receiving hole for receiving the temperature sensor assembly, and including a first fastening portion adjacent to the receiving hole, wherein the temperature sensor assembly includes a temperature sensor configured to measure a temperature of at least one of the battery cells, a temperature sensor cover including a second fastening portion configured to be fastened to the first fastening portion, and an elastic member between the circuit board and the temperature sensor cover.

The temperature sensor assembly may be fixed to the busbar holder via the first fastening portion and the second fastening portion.

The second fastening portion may have a protruding shape, wherein the first fastening portion has a recessed shape corresponding to the protruding shape of the second fastening portion, such that the second fastening portion is configured to be fitted into and fastened to the first fastening portion.

The second fastening portion may include a stepped protruding hook, wherein the first fastening portion has a shape of a stepped recess configured to receive the second fastening portion.

The first fastening portion may have a hook shape having one or more angles, wherein the second fastening portion defines a through-hole, and wherein the first fastening portion is configured to extend through, to be fitted into, and to be fastened to the second fastening portion.

The temperature sensor cover may include a same material as the busbar holder.

The temperature sensor cover may be fixed to an upper surface of the elastic member using adhesive.

The temperature sensor cover may include an injection molded material.

The circuit board may include a flexible circuit board including a temperature-sensor-connecting portion, wherein the temperature sensor assembly further includes a metal tab for contacting the temperature sensor and the at least one of the battery cells, the metal tab being fixed to a lower surface of the temperature-sensor-connecting portion via an adhesive, and wherein the elastic member is fixed to an upper surface of the temperature-sensor-connecting portion via an adhesive.

The elastic member may be pressed between the temperature sensor cover and the metal tab.

The elastic member may define a through-hole for receiving the temperature sensor therethrough.

The temperature sensor might not directly contact the elastic member, the busbar holder, or the temperature sensor cover.

A busbar holder assembly according to one or more embodiments of the present disclosure may include a circuit board electrically connected to busbars, and including a temperature sensor assembly, and a busbar holder for supporting the busbars, defining a receiving hole configured to receive the temperature sensor assembly, and including a first fastening portion adjacent to the receiving hole, wherein the temperature sensor assembly includes a temperature sensor configured to measure a temperature of at least one battery cell, a temperature sensor cover including a second fastening portion for being fastened to the first fastening portion, and an elastic member between the circuit board and the temperature sensor cover.

The first fastening portion and the second fastening portion may be fastened to each other so that the temperature sensor assembly is fixed to the busbar holder.

The second fastening portion of the temperature sensor cover may have a protruding shape, wherein the first fastening portion has a recessed shape corresponding to the protruding shape of the second fastening portion, and wherein the second fastening portion is fitted into and fastened to the first fastening portion.

The first fastening portion may have a hook shape having one or more angles, wherein the second fastening portion includes a through-hole, and wherein the first fastening portion extends through, is fitted into, and is fastened to the second fastening portion.

A method of manufacturing a busbar holder assembly according to one or more embodiments of the present disclosure includes forming a temperature sensor assembly by attaching an elastic member to an upper surface of a temperature-sensor-connecting portion of a circuit board that is coupled to a temperature sensor configured to measure a temperature of at least one battery cell, and by attaching a temperature sensor cover to an upper surface of the elastic member, providing the temperature sensor assembly above a busbar holder so that the temperature sensor assembly is received in a receiving hole defined by the busbar holder, and fastening a first fastening portion, which is adjacent to the receiving hole of the busbar holder, to a second fastening portion provided in the temperature sensor cover by pressing the temperature sensor assembly in a direction of the busbar holder, wherein the circuit board is configured to be electrically connected to busbars.

The second fastening portion of the temperature sensor cover may have a protruding shape, wherein the first fastening portion has a recessed shape for receiving the second fastening portion, and wherein the fastening includes fitting the second fastening portion into the first fastening portion by pressing the temperature sensor assembly in the direction of the busbar holder.

The second fastening portion may include a stepped protruding hook, wherein the first fastening portion has a shape of a stepped recess for receive the second fastening portion, and wherein the fastening includes fitting the second fastening portion into the first fastening portion by pressing the temperature sensor assembly in the direction of the busbar holder.

The first fastening portion may have a hook shape having one or more angles, wherein the second fastening portion defines a through-hole, and wherein the fastening includes causing the second fastening portion to extend through, to be fitted into, and to be fastened to, the second fastening portion by pressing the temperature sensor assembly in the direction of the busbar holder.

However, the present disclosure is not limited to the above, and other aspects of the present disclosure will be clearly understood by those skilled in the art from the description of the present disclosure below.

According to some embodiments of the present disclosure, the defect rate and manufacturing time of a process of manufacturing a temperature sensor assembly may be reduced, and resources used in the manufacturing of a battery module may be saved.

However, aspects of the present disclosure are not limited to those described above, and other aspects not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects of the present disclosure together with the detailed description of the present disclosure. Thus, the present disclosure should not be construed as being limited to the drawings:
FIG. 1 illustrates a perspective view showing an example of a battery cell according to embodiments of the present disclosure.
FIG. 2 illustrates an exploded perspective view showing an example of exploded portions of a battery module according to embodiments of the present disclosure.
FIG. 3 illustrates a plan view showing an example of the circuit board including the temperature sensor assembly A according to embodiments of the present disclosure.
FIG. 4A illustrates a perspective view showing an example of the temperature sensor assembly according to embodiments of the present disclosure.
FIG. 4B illustrates an exploded perspective view showing an example of exploded portions of the temperature sensor assembly of FIG. 4A.
FIG. 4C illustrates a perspective view showing another side of the temperature sensor assembly of FIG. 4A.
FIG. 5 illustrates an exploded perspective view showing an example of the temperature sensor assembly according to embodiments of the present disclosure.
FIG. 6A illustrates perspective view showing an example of the temperature sensor cover according to embodiments of the present disclosure.
FIG. 6B illustrates plan view showing an example of the temperature sensor cover according to embodiments of the present disclosure.
FIG. 6C illustrates front view showing an example of the temperature sensor cover according to embodiments of the present disclosure.
FIG. 7 illustrates a view showing an example of a method of manufacturing a busbar holder according to embodiments of the present disclosure.
FIG. 8 illustrates a cross-sectional view showing an example in which the temperature sensor assembly according to embodiments of the present disclosure is fastened to the busbar holder.
FIG. 9A illustrates a perspective view showing an example of the temperature sensor assembly according to embodiments of the present disclosure.
FIG. 9B illustrates an exploded perspective view showing exploded portions of the temperature sensor assembly of FIG. 9A.
FIG. 10 illustrates a view showing an example of the method of manufacturing a busbar holder according to embodiments of the present disclosure.
FIG. 11 illustrates a cross-sectional view showing an example in which the temperature sensor assembly according to embodiments of the present disclosure is fastened to the busbar holder.
FIG. 12 illustrates a flowchart showing an example of a method of manufacturing a busbar holder assembly according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

The embodiments of the present disclosure are combinable. For example, a feature that is described with respect to only one embodiment may also be provided for another embodiment. Further, an embodiment may also include less features, or other features, than described. That is, not all the features of an embodiment need necessarily be present.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases, such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or " ing," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being located (or located or positioned) on the "above (or below)" or "on (or under)" a component, it may mean that the arbitrary element is placed in contact with the upper (or lower) surface of the component and may also mean that another component may be interposed between the component and any arbitrary element located (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery pack according to one or more embodiments includes at least one battery module, and a pack housing having an accommodation space in which the at least one battery module is accommodated.

The battery module may include a plurality of battery cells and a module housing. The battery cells may be accommodated inside the module housing in a stacked form/stacked arrangement/stacked configuration. Each battery cell may have a positive electrode terminal and a negative electrode terminal, and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing, or may be accommodated in an accommodation space partitioned by a frame, a partition wall, etc.

The battery cell may generate a large amount of heat during charging/discharging. The generated heat may be accumulated in the battery cell, and deterioration of the battery cell may be accelerated. In one or more embodiments, the battery pack may further include a cooling member to remove the generated heat, and may suppress deterioration of the battery cell. The cooling member may be provided at the bottom of the accommodation space at where the battery cell is provided, but is not limited thereto, and the cooling member may be provided at the top or side depending on the battery pack.

The battery cell may be configured such that exhaust gas generated inside the battery cell under abnormal operating conditions, also known as thermal runaway or thermal events, may be discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. in one or more embodiments, on the basis of the monitored state information, the control device may perform a control function (e.g., temperature control, balancing control, charge/discharge control, etc.) and a protection function (e.g., over-discharge, over-charge, over-current protection, short circuit, fire extinguishing function, etc.). in one or more embodiments, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state, and that performs diagnosis-and-control, communication, and protection functions, and may calculate the charge/discharge state, may calculate battery life or state of health (SOH), may cut off battery power (e.g., relay control) as suitable, may control thermal management (e.g., cooling, heating, etc.), may perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if a problem occurs in the vehicle and the battery system, and may include one or more relays and pre-charge relays respectively at the positive terminal and the negative terminal.

In the pre-charge control, there is a risk of inrush current occurring in the high-voltage capacitor on the input side of the inverter upon connection of the battery load. To reduce or prevent the likelihood of inrush current upon starting a vehicle, the pre-charge relay may be operated before connecting the main relay, and the pre-charge resistor may be connected.

The high-voltage interlock is a circuit that uses a small signal to detect whether or not all high-voltage parts of the entire vehicle system are connected, and may have a function of forcibly opening a relay if an opening occurs at even one location on the entire loop.

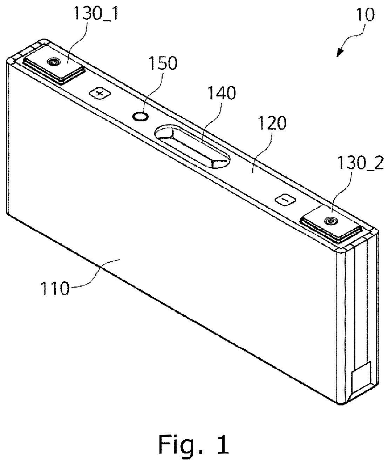

FIG. 1 illustrates a perspective view showing an example of a battery cell 10 according to embodiments of the present disclosure. Referring to FIG. 1, the battery cell 10 may include: one or more electrode assemblies wound or stacked with a separator (e.g., an insulator) between a positive electrode and a negative electrode; a casing 110 including the electrode assemblies located therein; and a cap plate 120 coupled to one open end of the casing 110. The battery cell 10 shown in FIG. 1 may be a secondary battery.

Each of the positive electrode and the negative electrode may include a current collector made of a thin metal foil having a coated portion on which an active material is coated, and an uncoated portion on which an active material is not coated.

The positive electrode and the negative electrode are wound after interposing the separator, which is an insulator, therebetween. The present disclosure is not limited thereto, and the electrode assembly may have a structure in which a positive electrode and a negative electrode, each made of a plurality of sheets, are alternately stacked with a separator interposed therebetween.

The case 110 may form the overall outer appearance of the battery cell 100, and may be made of a conductive metal, such as aluminum, aluminum alloy, or nickel-plated steel. In one or more embodiments, the case 110 may provide a space in which the electrode assembly is accommodated. In FIG. 1, the casing 110 is shown as being a prismatic casing, and the battery cell 10 is shown as being a prismatic battery cell, but the scope of the present disclosure is not limited thereto. The battery cell 10 may be any shape battery cell, such as an angular battery cell, a cylindrical battery cell, or a pouch-shaped battery cell.

The cap plate 120 may be coupled to the open end of the casing 110 to seal the casing 110. The casing 110 and the cap plate 120 may include a conductive material. In some embodiments, the upper end of the casing 110 may be open, and the cap plate 120 may seal the open upper end of the casing 110.

A positive electrode terminal 130_1 electrically connected to the positive electrode, and a negative electrode terminal 130_2 electrically connected to the negative electrode may be coupled to the cap plate 120. For example, the positive and negative electrode terminals 130_1 and 130_2 may be located to protrude outward through the cap plate 120.

In some embodiments, a vent 140 may be provided in at least one surface of the battery cell 10 (e.g., the upper surface of the battery cell 10, e.g., the cap plate 120, in the shown example). The vent 140 may be configured to be opened if an internal pressure equal to or higher than a threshold pressure (e.g., predetermined threshold pressure) is detected in the battery cell 10.

In some embodiments, the cap plate 120 may include an electrolyte inlet 150. For example, the electrolyte inlet 150 may be a through-hole provided in the cap plate 120. The electrolyte inlet 150 may be formed to allow electrolyte to be injected into the casing 110 therethrough after the cap plate 120 is coupled to the opening of the casing 110 to seal the casing 110. The electrolyte inlet 150 may be sealed with a sealing member after the injection of the electrolyte.

The battery cell 10 may be a lithium (Li) battery cell, a sodium (Na) battery cell, or the like. The scope of the present disclosure is not limited thereto, and the battery cell 10 includes any battery able to repeatedly provide electricity due to charging and discharging. In some embodiments, in a case where the battery cell 10 is a Li battery cell, the battery cell 10 may be used in an electric vehicle (EV) due to excellent lifespan characteristics and high rate characteristics. For example, the battery cell 10 may be used in a hybrid vehicle, such as a plug-in hybrid electric vehicle (PHEV). In one or more embodiments, the Li battery cell may be used in a field suitable for a large amount of power storage. For example, the Li battery cell may be used in e-bikes, power tools, and the like.

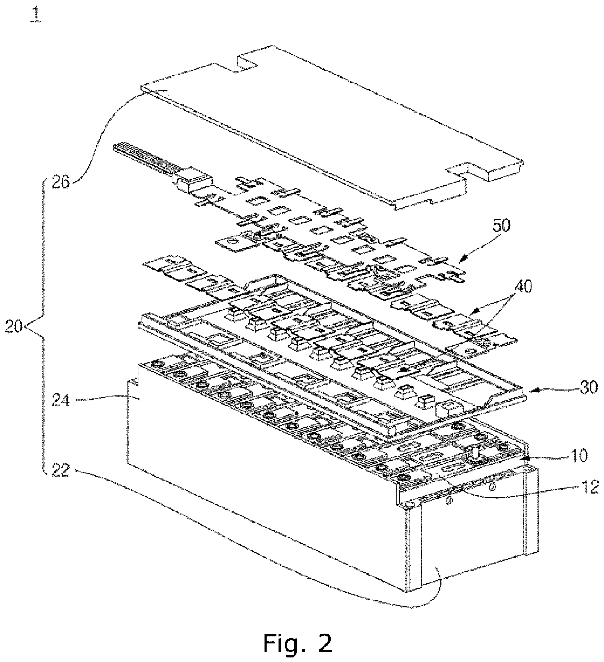

FIG. 2 illustrates an exploded perspective view showing an example of exploded portions of a battery module 1 according to embodiments of the present disclosure. Referring to FIG. 2, the battery module 1 according to the present disclosure includes a plurality of battery cells 10, a frame 20 containing the battery cells 10, a plurality of busbars 40 electrically connected to the battery cells 10, a busbar holder 30 supporting the busbars 40, and a circuit board 50 electrically connected to the busbars 40 and having a variety of circuits and components mounted thereon. In some embodiments, the battery module 1 may be referred to as a battery pack. In some embodiments, the battery module 1 may be included in a vehicle.

The battery module 1 may include the battery cells 10. In some embodiments, in the battery module 1, the battery cells 10 may be arranged in one direction such that wider surfaces face each other.

In some embodiments, each of the battery cells 10 may include a casing, electrode assemblies contained together with electrolyte inside the casing, and a cap plate 12 sealing the casing. Each of the electrode assemblies may be formed by sequentially winding or stacking a negative electrode plate, a separator, and a positive electrode plate. The negative electrode plate implemented as a metal foil of, for example, a copper (Cu), a Cu alloy, nickel (Ni), or a Ni alloy, may be applied or coated with a negative active material of, for example, graphite or carbon (C). The positive electrode plate implemented as a metal foil of, for example, aluminum (Al) or an Al alloy, may be applied or coated with an active material, such as transition metal oxide. Each of the negative electrode plate and the positive electrode plate may be provided with an uncoated portion (e.g., an area to which no active material is applied). A negative electrode tab may be connected to the negative electrode uncoated portion, and a positive electrode tab may be connected to the positive electrode uncoated portion. The negative electrode tab and the positive electrode tab connected in this manner may be respectively electrically connected to the negative electrode terminal and the positive electrode terminal provided on the cap plate 12. The negative electrode terminal and the positive electrode terminal provided on the cap plate 12 may be electrically connected to the busbars 40. In one or more embodiments, the structure of the battery cells 10 is not limited thereto, and may be suitably altered as desired. In one or more embodiments, the number and arrangement of the battery cells 10 are not limited to the structure shown in FIG. 2, and may be suitably changed as desired.

The plurality of battery cells 10 may be contained in the frame 20. In some embodiments, the frame 20 may include a pair of end plates 22 contacting outermost battery cells 10 in the direction of arrangement of the battery cells 10, a pair of side plates 24 perpendicularly coupled to the end plates 22, and a top plate 26 located above the end plates 22. In one or more embodiments, a bottom plate may be provided below the battery cells 10 to support the battery cells 10 from below. The battery cells 10, the busbar holder 30, the busbars 40, and the circuit board 50 may be received within the frame 20.

The busbar holder 30 may be positioned above the cap plate 12 in FIG. 2, and may support the busbars 40. For example, the busbar holder 30 may be a substantially rectangular plate, and may be made of an insulating material.

The busbar holder 30 may be provided with a plurality of through-holes through which the positive electrode terminal and the negative electrode terminal of the cap plate 12 are exposed. The positive electrode terminal and the negative electrode terminal may be exposed through the through-holes formed in the busbar holder 30, and the busbars 40 may be electrically connected to the exposed positive electrode terminal and the negative electrode terminal. In some embodiments, the busbar holder 30 may be provided with a receiving hole to receive a temperature sensor assembly included in the circuit board 50.

The busbars 40 may electrically connect the positive electrode terminal and the negative electrode terminal. The busbars 40 may connect the battery cells 10 in series and/or parallel. For this purpose, the busbars 40 may be provided as a plurality of busbars. In some embodiments, the busbars 40 may electrically connect the positive electrode terminal of one battery cell 10 to the positive electrode terminal or to the negative electrode terminal of another battery cell 10. In one or more embodiments, the busbars 40 may electrically connect the negative electrode terminal of one battery cell 10 to the positive electrode terminal or to the negative electrode terminal of another battery cell 10. The busbars 40 may be connected to the positive electrode terminal and/or the negative electrode terminal by welding or the like. Areas of each of the battery cells 10, other than the positive electrode terminal and the negative electrode terminal, may be insulated from the busbars 40 by the busbar holder 30. The circuit board 50 may be provided between the busbars 40 and the top plate 26, and the busbars 40 may be electrically connected to the circuit board 50.

Various components for measuring state information of the battery cells 10, such as voltages and/or temperatures of the battery cells 10, and various components or circuits configured to control and/or manage the battery cells 10 may be mounted on the circuit board 50. In some embodiments, the circuit board 50 may include a battery management system (BMS). In some embodiments, the circuit board 50 may be electrically connected to the outside of the battery module 1 through a separate connector.

In some embodiments, the circuit board 50 may include a temperature sensor assembly including a temperature sensor configured to measure temperatures of the battery cells 10. The features of the temperature sensor assembly and the circuit board 50 including the same will be described in more detail below with reference to the following drawings.

In some embodiments, the circuit board 50 may have a substantially rectangular shape, and may be located such that the longitudinal direction thereof coincides with the direction of the arrangement of the battery cells 10. Because the circuit board 50 is desirably connected to the busbars 40, the circuit board 50 may have a size to cover at least a portion (e.g., a predetermined portion) of the area of the busbar holder 30. The circuit board 50 may have a size to be at least adjacent to the provision area of the busbars 40 for smooth connection to the busbars 40. For example, the circuit board 50 may have a short side length corresponding to the distance between the left busbars 40 and the right busbars 40 in FIG. 2. In one or more embodiments, the circuit board 50 may have a long side length corresponding to a sum of the widths of the left busbars 40 or the right busbars 40, according to the direction of arrangement of the battery cells 10.

The circuit board 50 may generally be positioned above the busbar holder 30. In this case the temperature sensor assembly of the circuit board 50 may be seated in the receiving hole formed in the busbar holder 30, and metal tabs included in the temperature sensor assembly may contact the upper portions of the battery cells 10.

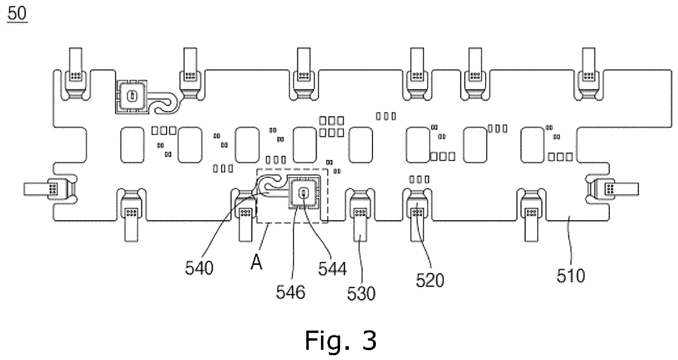

FIG. 3 illustrates a plan view showing an example of the circuit board 50 including the temperature sensor assembly A according to embodiments of the present disclosure. Various components for measuring state information of the battery cells, such as voltages and/or temperatures of the battery cells, and various components or circuits configured to control and/or manage the battery cells may be mounted on the circuit board 50. In some embodiments, a body of the circuit board may include a flexible circuit board 510 made of a flexible material. In some embodiments, the flexible circuit board 510 (or the circuit board 50 including a flexible circuit board) may be referred to as a flexible printed circuit board (FPCB) or as a flexible printed circuit assembly (FPCA).

In some embodiments, one or more tab-connecting portions 520 may be provided on long side edges and/or short side edges of the flexible circuit board 510. Circuit board tabs 530 may be connected to the tab-connecting portions 520, respectively. The tab-connecting portions 520 may be connected to the busbars through the circuit board tabs 530.

The circuit board tabs 530 may be metal material tabs configured to connect the tab-connecting portions 520 to the busbars, respectively. For example, the circuit board tabs 530 may be substantially rectangular tabs made of a Ni material, but are not limited thereto. One end of each of the circuit board tabs 530 may be connected to a corresponding tab-connecting portion 520, and the other end of each of the circuit board tabs 530 may extend outside the tab-connecting portion 520 to be connected to a corresponding busbar.

In some embodiments, the tab-connecting portion 520 and one end of the circuit board tab 530, and/or the busbar and the other end of the circuit board tab 530, may be connected by welding (e.g., soldering, ultrasonic welding, or laser welding). In one or more embodiments, the method of connecting the tab-connecting portion 520 to one end of the circuit board tab 530 and/or the busbar to the other end of the circuit board tab 530 is not limited thereto, and any electrically connectable coupling method may be used.

In some embodiments, the circuit board 50 may include the temperature sensor assembly A. The temperature sensor assembly A may include a temperature sensor 544 configured to measure a temperature of a battery cell, a temperature sensor cover 546, and an elastic member located between the circuit board 50 and the temperature sensor 544.

For example, the flexible circuit board 510 may include a temperature-sensor-connecting portion 540 extending from one edge of the flexible circuit board 510. In some embodiments, the temperature-sensor-connecting portion 540 may be a flexible material, and may move with degrees of freedom in any direction. The temperature sensor 544 may be connected to the temperature-sensor-connecting portion 540. An elastic member having a through-hole configured to receive a temperature sensor may be coupled to an upper portion of the temperature-sensor-connecting portion 540. The temperature sensor cover 546 may be coupled to an upper portion of the elastic member. With the temperature sensor cover 546 being fastened to the busbar holder, the temperature sensor assembly A may be fixed to the busbar holder. The features of the temperature sensor assembly A will be described in more detail below with reference to the following drawings.

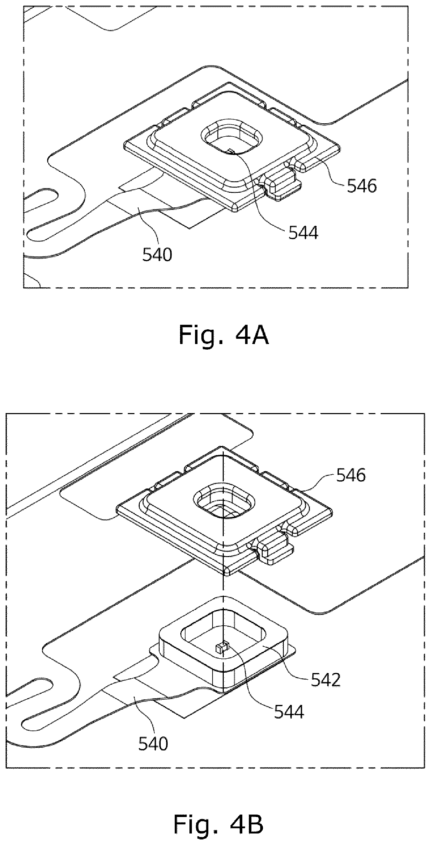

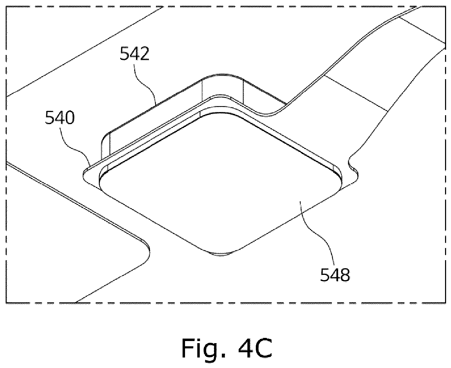

FIG. 4A illustrates a perspective view showing an example of the temperature sensor assembly according to embodiments of the present disclosure. FIG. 4B illustrates an exploded perspective view showing an example of exploded portions of the temperature sensor assembly of FIG. 4A. FIG. 4C illustrates a perspective view showing another side of the temperature sensor assembly of FIG. 4A.

Referring to FIGS. 4A and 4B, the temperature sensor 544 may be coupled to the temperature-sensor-connecting portion 540 made of a flexible material and extending from one edge of the flexible circuit board.

An elastic member 542 including a through-hole configured to receive the temperature sensor 544 may be coupled to the upper portion of the temperature-sensor-connecting portion 540. The temperature sensor 544 may be positioned in the through-hole of the elastic member 542. For example, the elastic member 542 may be shaped to surround the temperature sensor 544 by receiving the temperature sensor 544 in the through-hole. In some embodiments, the elastic member 542 may not directly contact the temperature sensor 544. In some embodiments, the elastic member 542 may not directly contact the temperature sensor 544. The elastic member 542 may include any elastic material. For example, the elastic member 542 may be a foam pad, or may include a silicone or epoxy material, but is not limited thereto.

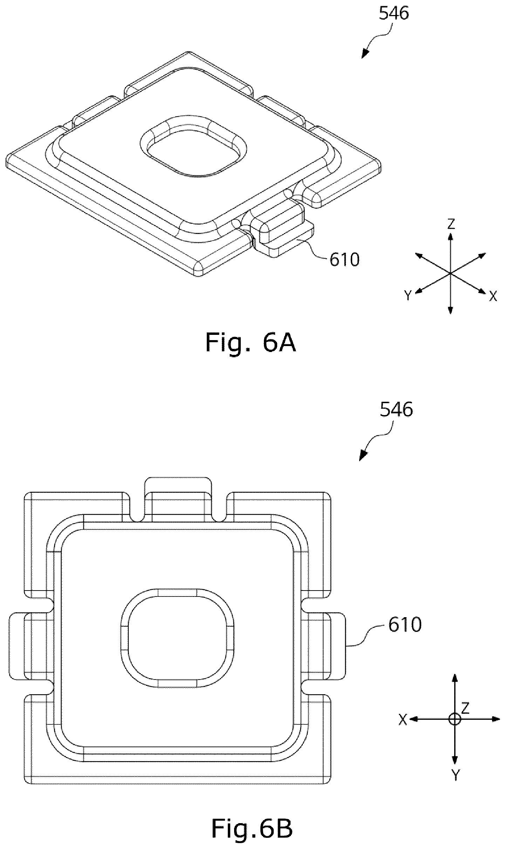

The temperature sensor cover 546 may be coupled to an upper portion of the elastic member 542. The temperature sensor cover 546 may include a second fastening portion. With the second fastening portion of the temperature sensor cover 546 being fastened to a first fastening portion of the busbar holder, the temperature sensor assembly may be fixed to the busbar holder. In some embodiments, the temperature sensor cover 546 may not directly contact the temperature sensor 544. The features of the temperature sensor cover 546 will be described in more detail later with reference to FIGS. 6A to 11.

Referring to FIG. 4C, a metal tab 548 configured to be connected to the temperature sensor 544 and the battery cell (e.g., the cap plate or the casing of the battery cell) may be coupled to a lower portion of the temperature-sensor-connecting portion 540 (in a direction toward the battery cell). In some embodiments, the metal tab 548 may contact the temperature sensor 544 and/or may be electrically connected to the temperature sensor 544. The metal tab 548 may include a high electric conductivity material. For example, the metal tab 548 may include an Al material, but is not limited thereto. The metal tab 548 may include any metal material. The metal tab 548 may contact the surface of the battery cell so as to measure a temperature of the battery cell. The shape and length of the temperature-sensor-connecting portion 540 may vary depending on the position at which the metal tab 548 contacts the battery cell.

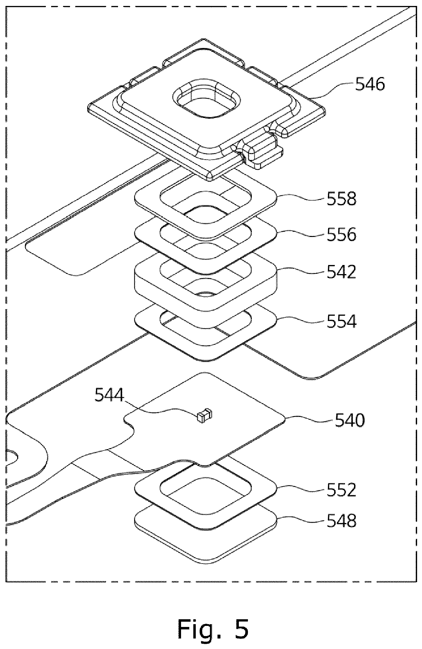

FIG. 5 illustrates an exploded perspective view showing an example of the temperature sensor assembly according to embodiments of the present disclosure. Referring to FIG. 5, the temperature sensor 544 may be coupled to the temperature-sensor-connecting portion 540. For example, the temperature sensor 544 may be coupled to a central portion of the temperature-sensor-connecting portion 540.

The metal tab 548 configured to measure a temperature of the battery cell may be coupled to the lower portion of the temperature-sensor-connecting portion 540. For example, a first adhesive 552 (e.g., double-sided tape) may be provided between the metal tab 548 and the temperature-sensor-connecting portion 540. The metal tab 548 may be fixed to the lower surface of the temperature-sensor-connecting portion 540 using the first adhesive 552.

The elastic member 542 including/defining the through-hole configured to receive the temperature sensor 544 may be coupled to the upper portion of the temperature-sensor-connecting portion 540. For example, a second adhesive 554 (e.g., double-sided tape) may be provided between the temperature-sensor-connecting portion 540 and the elastic member 542. The elastic member 542 may be fixed to the upper surface of the temperature-sensor-connecting portion 540 using the second adhesive 554.

The temperature sensor cover 546 including the second fastening portion may be coupled to the upper portion of the elastic member 542. For example, a third adhesive 556 (e.g., double-sided tape) may be provided between the elastic member 542 and the temperature sensor cover 546. The temperature sensor cover 546 may be fixed to the upper surface of the elastic member 542 using the third adhesive 556. In some embodiments, before the temperature sensor cover 546 is fixed to the upper surface of the elastic member 542, release paper 558 may be provided on the upper surface of the third adhesive 556. A manufacturing entity (e.g., a manufacturing apparatus or a worker) of the temperature sensor assembly may remove the release paper 558 from the upper surface of the third adhesive 556 before fixing the temperature sensor cover 546 to the upper surface of the elastic member 542. With the second fastening portion of the temperature sensor cover 546 being fastened to the first fastening portion of the busbar holder, the temperature sensor assembly may be fixed to the busbar holder.

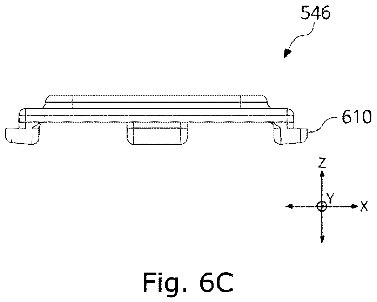

FIGS. 6A, 6B, and 6C respectively illustrate perspective, plan, and front views showing an example of the temperature sensor cover 546 according to embodiments of the present disclosure.

Referring to FIGS. 6A to 6C, the temperature sensor cover 546 may include a second fastening portion 610. In some embodiments, the second fastening portion 610 of the temperature sensor cover 546 may have a shape protruding from a body. For example, the second fastening portion 610 of the temperature sensor cover 546 may be a stepped protruding hook, as shown in FIGS. 6A to 6C.

In one or more embodiments, the temperature sensor cover 546 may have a substantially rectangular body, with the second fastening portion 610 being provided on one or more sides. For example, in a case where the body of the temperature sensor cover 546 has a shape including n sides (n being an integer), 2 to n second fastening portions 610 may protrude from 2 to n sides. In this case, the shape of the temperature sensor cover 546 is not limited thereto, but the body of the temperature sensor cover 546 may have any shape, such as a polygonal shape, a polyhedral shape, or a circular shape.

In some embodiments in which the second fastening portion 610 of the temperature sensor cover 546 has a protruding shape, the first fastening portion provided adjacent to the receiving hole configured to receive the temperature sensor assembly of the busbar holder may have a recessed shape to receive the second fastening portion 610 having the protruding shape. The second fastening portion 610 of the temperature sensor cover 546 may be fitted into, and fastened to, the first fastening portion of the busbar holder.

For example, in the example where the second fastening portion 610 of the temperature sensor cover 546 is the stepped protruding hook, the first fastening portion of the busbar holder may have the shape of a stepped recess configured to receive the second fastening portion 610 of the temperature sensor cover 546.

With the second fastening portion 610 of the temperature sensor cover 546 being fastened to the first fastening portion of the busbar holder, the temperature sensor assembly may be fixed to the busbar holder. In some embodiments, the temperature sensor cover 546 may not directly contact the temperature sensor.

In some embodiments, the temperature sensor cover 546 may be an injection molded product manufactured by injection molding. In one or more embodiments, the temperature sensor cover 546 may be made of an insulating material. For example, the temperature sensor cover 546 may be an injection molded insulating product manufactured by injection molding an insulating material. As the temperature sensor cover 546 is made of an insulating material, the temperature sensor cover 546 may be insulated from temperature sensors, busbars, circuits mounted on the circuit board, and the like. In some embodiments, the temperature sensor cover 546 may be made of a material that is the same as or similar to the material of the busbar holder.

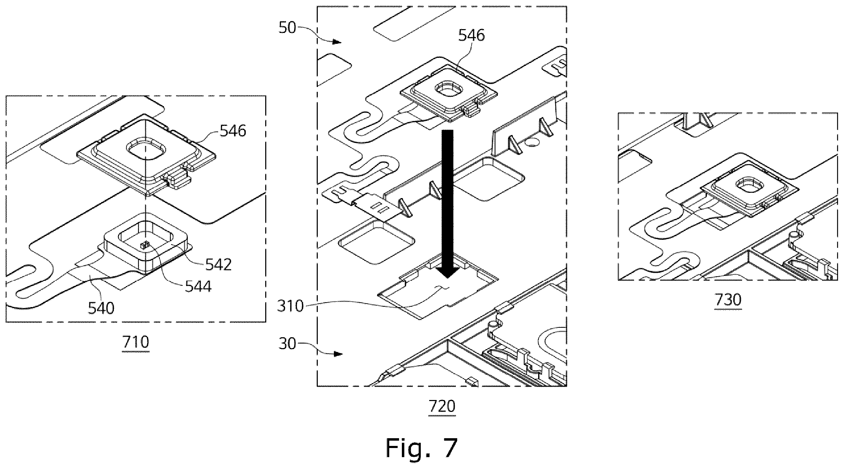

FIG. 7 illustrates a view showing an example of a method of manufacturing a busbar holder according to embodiments of the present disclosure. In some embodiments, the busbar holder assembly may be manufactured by a process including a first example 710, a second example 720, and a third example 730.

The first example 710 represents an example in which the temperature sensor assembly is manufactured. For example, the elastic member 542 may be attached to the upper surface of the temperature-sensor-connecting portion 540 to which the temperature sensor 544, which is configured to measure the temperature of at least one battery cell, is coupled. The temperature sensor cover 546 may be attached to the upper surface of the elastic member 542. Consequently, the temperature sensor assembly may be formed.

The second example 720 represents an example in which the temperature sensor assembly is fastened to the busbar holder 30. For example, first, the temperature sensor assembly included in the circuit board 50 may be provided above the busbar holder 30 so that the temperature sensor assembly is received in the receiving hole 310 provided in the busbar holder 30. Thereafter, in response to the temperature sensor assembly provided above the busbar holder 30 being pressed in the direction of the busbar holder 30, the first fastening portion provided adjacent to the receiving hole 310 of the busbar holder 30 may be fastened to the second fastening portion provided in the temperature sensor cover 546. In one or more embodiments, in response to the temperature sensor assembly being pressed in the direction of the busbar holder 30, the second fastening portion of the temperature sensor cover 546 having the protruding shape (e.g., a stepped protruding shape) may be fitted into the first fastening portion of the busbar holder 30 that has the recessed shape (e.g., a shape of a stepped recess) and that is configured to receive the second fastening portion.

The third example 730 represents an example in which a busbar holder assembly is manufactured in response to the temperature sensor assembly being fastened to the busbar holder 30.

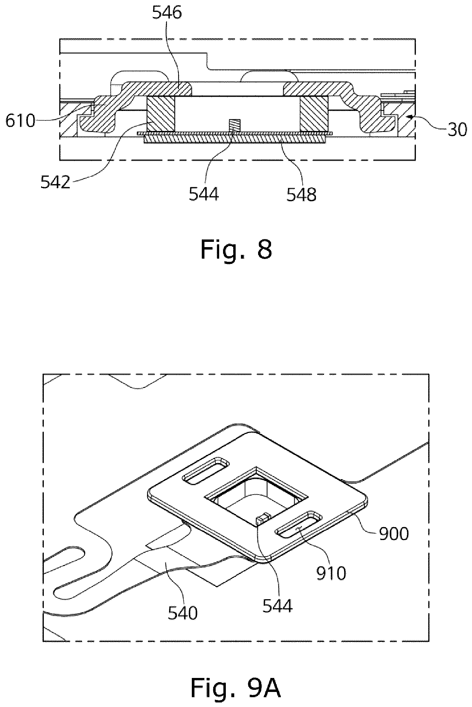

FIG. 8 illustrates a cross-sectional view showing an example in which the temperature sensor assembly according to embodiments of the present disclosure is fastened to the busbar holder 30. Referring to FIG. 8, the busbar holder 30 may be provided with a receiving hole configured to receive the temperature sensor assembly, and the temperature sensor assembly may be seated in the receiving hole.

Referring to the temperature sensor assembly, the elastic member 542 including the through-hole configured to receive the temperature sensor 544 may be fixed to the upper surface of the temperature-sensor-connecting portion, and the temperature sensor 544 may be provided in the through-hole of the elastic member 542. For example, the elastic member 542 may receive the temperature sensor 544 in the through-hole, and may have a shape surrounding the temperature sensor 544. In one or more embodiments, the elastic member 542 may not directly contact the temperature sensor 544.

The metal tab 548 may be fixed to the lower surface of the temperature-sensor-connecting portion (in the direction of the battery cell). The metal tab 548 may contact the surface of the battery cell so as to measure the temperature of the battery cell.

The temperature sensor cover 546 may be fixed to the upper surface of the elastic member 542. In some embodiments, the temperature sensor cover 546 may include the second fastening portion 610 having the protruding shape (e.g., the stepped protruding hook). In this case, the first fastening portion having the recessed shape (e.g., a shape of a stepped recess) adjacent to the receiving hole that is configured to receive the temperature sensor assembly of the busbar holder 30. The second fastening portion 610 of the temperature sensor cover 546 may be fitted into, and fastened to, the recessed first fastening portion of the busbar holder 30. With the second fastening portion 610 of the temperature sensor cover 546 being fitted into/fastened to the first fastening portion of the busbar holder 30, the temperature sensor assembly may be fixed to the busbar holder 30. In some embodiments, the temperature sensor cover 546 may not contact the temperature sensor 544.

In some embodiments, the elastic member 542 may be pressed between the temperature sensor cover 546 and the metal tab 548. For example, the height between the temperature sensor cover 546 and the metal tab 548 may be determined so that the pressing of about 30% to about 70% of the elastic member 542 may be maintained, and in a shaking situation (e.g., in response to external impact), the metal tab 548 may remain in contact with the surface of the battery cell as the elastic member 542 elastically stretches.

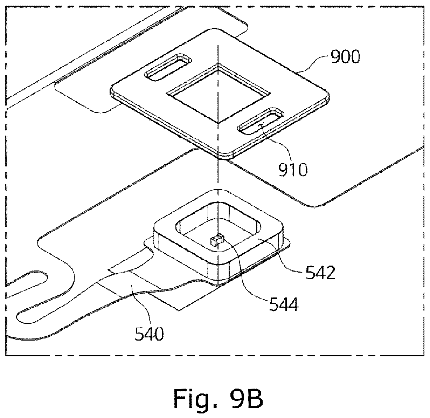

FIG. 9A illustrates a perspective view showing an example of the temperature sensor assembly according to embodiments of the present disclosure, and FIG. 9B illustrates an exploded perspective view showing exploded portions of the temperature sensor assembly of FIG. 9A.

In some embodiments, the temperature sensor cover 546 may include the second fastening portion 910 having the shape of a through-hole. Most of the features of the temperature sensor cover 546 and the temperature sensor assembly described above with reference to FIGS. 4A to 6C may be applied to the temperature sensor cover 900 and the temperature sensor assembly of FIGS. 9A and 9B in the same or similar manner. In the following description with reference to FIGS. 9A and 9B, the above-described configurations will be briefly described or not repeated, and modified configurations will be mainly described.

With reference to FIGS. 9A and 9B, the temperature sensor 544 may be coupled to the temperature-sensor-connecting portion 540 made of a flexible material extending from one edge of the flexible circuit board.

The elastic member 542 including the through-hole configured to receive the temperature sensor 544 may be coupled to the upper portion of the temperature-sensor-connecting portion 540.

The temperature sensor cover 900 may be coupled to the upper portion of the elastic member 542. The temperature sensor cover 900 may include the second fastening portion 910. In some embodiments, the second fastening portion 910 of the temperature sensor cover 900 may be a through-hole. For example, the temperature sensor cover 900 may have a substantially rectangular body, and the second fastening portion 910 may be provided adjacent to one or more sides. In one or more embodiments, in a case where the body of the temperature sensor cover 900 has a shape including n sides (n being an integer), 2 to n through-holes may be provided as second fastening portions 910 in portions adjacent to 2 to n of the sides. In this case, the shape of the temperature sensor cover 900 is not limited thereto, but the body of the temperature sensor cover 900 may have any shape, such as a polygonal shape, a polyhedral shape, or a circular shape.

In some embodiments in which the second fastening portion 910 of the temperature sensor cover 900 is provided as a through-hole, the first fastening portion provided adjacent to the receiving hole, which is configured to receive the temperature sensor assembly of the busbar holder, may have a hook shape having one or more angles. The first fastening portion of the busbar holder may extend through, may be fitted into, and may be fastened to, the second fastening portion 910 of the temperature sensor cover 900.

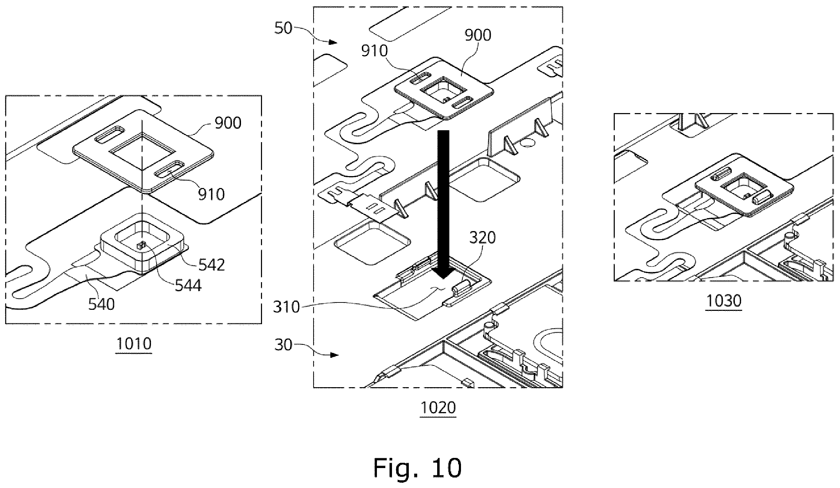

FIG. 10 illustrates a view showing an example of the method of manufacturing a busbar holder according to embodiments of the present disclosure. In some embodiments, the busbar holder assembly may be manufactured by a process including a first example 1010, a second example 1020, and a third example 1030.

The first example 1010 represents an example in which the temperature sensor assembly is manufactured. For example, the elastic member 542 may be attached to the upper surface of the temperature-sensor-connecting portion 540 to which the temperature sensor 544, which is configured to measure the temperature of at least one battery cell, is coupled. The temperature sensor cover 900 may be attached to the upper surface of the elastic member 542. Consequently, the temperature sensor assembly may be formed.

The second example 1020 represents an example in which the temperature sensor assembly is fastened to the busbar holder 30. For example, first, the temperature sensor assembly included in the circuit board 50 may be provided above the busbar holder 30 so that the temperature sensor assembly is received in the receiving hole 310 provided in the busbar holder 30. Thereafter, in response to the temperature sensor assembly provided above the busbar holder 30 being pressed in the direction of the busbar holder 30, the first fastening portion 320 provided adjacent to the receiving hole 310 of the busbar holder 30 may be fastened to the second fastening portion 910 provided in the temperature sensor cover 900. In one or more embodiments, in response to the temperature sensor assembly being pressed in the direction of the busbar holder 30, the first fastening portion 320 of the busbar holder 30 having the hook shape having one or more angles may extend through, may be fitted into, and may be fastened to, the second fastening portion 910 of the temperature sensor cover 900 having the shape of a through-hole.

The third example 1030 represents an example in which a busbar holder assembly is manufactured in response to the temperature sensor assembly being fastened to the busbar holder 30.

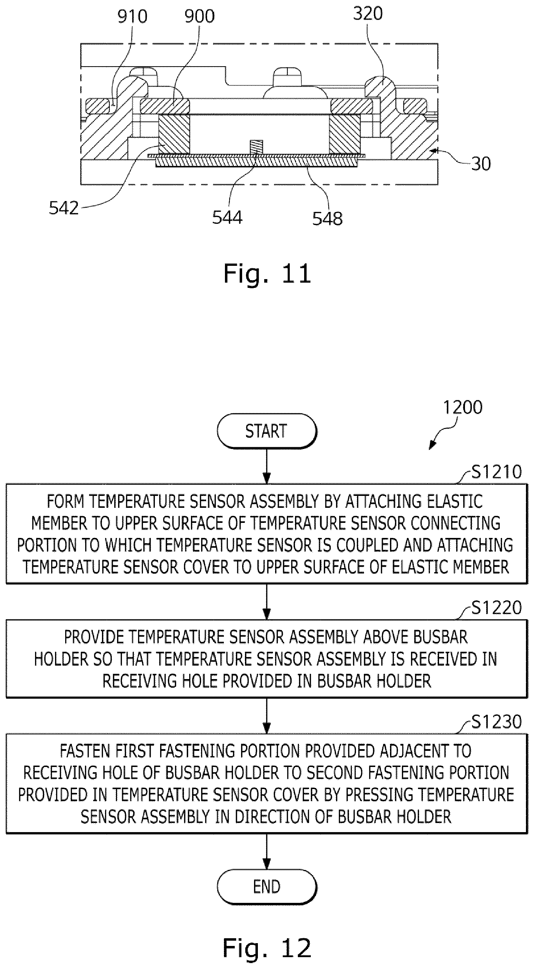

FIG. 11 illustrates a cross-sectional view showing an example in which the temperature sensor assembly according to embodiments of the present disclosure is fastened to the busbar holder 30. Most of the features of the fastening described above with reference to FIG. 8 may be applied to the example of FIG. 11 in the same or similar manner. In the following description with reference to FIG. 11, the above-described configurations will be briefly described or not repeated, and modified configurations will be mainly described.

Referring to FIG. 11, the busbar holder 30 may be provided with a receiving hole configured to receive the temperature sensor assembly, and the temperature sensor assembly may be seated in the receiving hole.

Referring to the temperature sensor assembly, the elastic member 542 including the through-hole configured to receive the temperature sensor 544 may be fixed to the upper surface of the temperature-sensor-connecting portion, and the temperature sensor 544 may be provided in the through-hole of the elastic member 542.

The metal tab 548 may be fixed to the lower surface of the temperature-sensor-connecting portion (in the direction of the battery cell). The metal tab 548 may contact the surface of the battery cell so as to measure the temperature of the battery cell.

The temperature sensor cover 900 may be fixed to the upper surface of the elastic member 542. In some embodiments, the temperature sensor cover 900 may include the second fastening portion 910 having the shape of a through-hole. In this case, the first fastening portion 320 having the hook shape having one or more angles may be provided adjacent to the receiving hole configured to receive the temperature sensor assembly of the busbar holder 30. The hook-shaped first fastening portion 320 of the busbar holder 30 may extend through, may be fitted into, and may be fastened to, the second fastening portion 910 having the shape of a through-hole of the temperature sensor cover 900. With the first fastening portion 320 of the busbar holder 30 extending through and being fitted into and fastened to the second fastening portion 910 of the temperature sensor cover 900, the temperature sensor assembly may be fixed to the busbar holder 30.

FIG. 12 illustrates a flowchart showing an example of a method 1200 of manufacturing a busbar holder assembly according to embodiments of the present disclosure. In some embodiments, the method 1200 of manufacturing a busbar holder assembly may be performed by, for example, a busbar holder assembly manufacturing apparatus or a battery module manufacturing apparatus (hereinafter, referred to as a manufacturing apparatus).

The manufacturing apparatus (e.g., an attachment portion of the manufacturing apparatus) may form the temperature sensor assembly by attaching the elastic member to the upper surface of the temperature-sensor-connecting portion of the circuit board (e.g., the circuit board electrically connected to a plurality of busbars), to which the temperature sensor configured to measure the temperature of at least one battery cell is coupled, and by attaching the temperature sensor cover to the upper surface of the elastic member in S1210.

Afterwards, the manufacturing apparatus (e.g., a pressing portion of the manufacturing apparatus) may provide the temperature sensor assembly above the busbar holder so that the temperature sensor assembly is received in the receiving hole provided in the busbar holder in S1220.

The manufacturing apparatus (e.g., the pressing portion of the manufacturing apparatus) may fasten the first fastening portion, which is provided adjacent to the receiving hole of the busbar holder, to the second fastening portion, which is provided in the temperature sensor cover, by pressing the temperature sensor assembly provided above the busbar holder in the direction of the busbar holder in S1230.

In some embodiments, the second fastening portion of the temperature sensor cover may have the protruding shape, and the first fastening portion of the busbar holder may have the recessed shape for receiving the second fastening portion having the protruding shape. For example, the second fastening portion of the temperature sensor cover may be the stepped protruding hook, and the first fastening portion of the busbar holder may have the shape of a stepped recess to receive the second fastening portion. The manufacturing apparatus (e.g., the pressing portion of the manufacturing apparatus) may fit the second fastening portion into the first fastening portion by pressing the temperature sensor assembly in the direction of the busbar holder.

In one or more embodiments, the first fastening portion of the busbar holder may have the hook shape having one or more angles, and the second fastening portion of the temperature sensor cover may have the shape of a through-hole. The manufacturing apparatus (e.g., the pressing portion of the manufacturing apparatus) may cause the first fastening portion to extend through, and to be fastened to, the second fastening portion by pressing the temperature sensor assembly in the direction of the busbar holder.

In an embodiment, a battery module comprises a plurality of battery cells; a plurality of busbars electrically connecting the battery cells; a circuit board comprising a temperature sensor assembly and electrically connected to the busbars; and a busbar holder comprising a receiving hole configured to receive the temperature sensor assembly and a first fastening portion provided adjacent to the receiving hole, and supporting the busbars, wherein the temperature sensor assembly comprises: a temperature sensor configured to measure a temperature of at least one battery cell of the battery cells; a temperature sensor cover comprising a second fastening portion fastened to the first fastening portion; and an elastic member disposed between the circuit board and the temperature sensor cover.

In an embodiment, the first fastening portion and the second fastening portion are fastened to each other so that the temperature sensor assembly is fixed to the busbar holder.

In an embodiment, the second fastening portion of the temperature sensor cover has a protruding shape, the first fastening portion has a recessed shape to receive the second fastening portion having the protruding shape, and the second fastening portion is fitted into and fastened to the first fastening portion.

In an embodiment, the second fastening portion comprises a stepped protruding hook, and the first fastening portion has a shape of a stepped recess to receive the second fastening portion.

In an embodiment, the first fastening portion has a hook shape having one or more angles, and the second fastening portion comprises a through-hole, and the first fastening portion extends through and is fitted into and fastened to the second fastening portion.

In an embodiment, the temperature sensor cover comprises a same material as the busbar holder.

In an embodiment, the temperature sensor cover is fixed to an upper surface of the elastic member using adhesive.

In an embodiment, the temperature sensor cover comprises an injection molded product.

In an embodiment, the circuit board comprises a flexible circuit board made of a flexible material, the flexible circuit board comprises a temperature sensor connecting portion, the temperature sensor assembly further comprises a metal tab in contact with the temperature sensor and the at least one battery cell, the metal tab is fixed to a lower surface of the temperature sensor connecting portion using adhesive, and the elastic member is fixed to an upper surface of the temperature sensor connecting portion using adhesive.

In an embodiment, the elastic member comprises a through-hole, and the temperature sensor is provided in the through-hole of the elastic member.

In an embodiment, the elastic member is pressed between the temperature sensor cover and the metal tab.

In an embodiment, the temperature sensor is not in direct contact with the elastic member, the busbar holder, or the temperature sensor cover.

In an embodiment, a busbar holder assembly comprises: a circuit board comprising a temperature sensor assembly and electrically connected to a plurality of busbars; and a busbar holder comprising a receiving hole configured to receive the temperature sensor assembly and a first fastening portion provided adjacent to the receiving hole, and supporting the busbars, wherein the temperature sensor assembly comprises: a temperature sensor configured to measure a temperature of at least one battery cell; a temperature sensor cover comprising a second fastening portion fastened to the first fastening portion; and an elastic member disposed between the circuit board and the temperature sensor cover.

In an embodiment, the first fastening portion and the second fastening portion are fastened to each other so that the temperature sensor assembly is fixed to the busbar holder.

In an embodiment, the second fastening portion of the temperature sensor cover has a protruding shape, the first fastening portion has a recessed shape to receive the second fastening portion having the protruding shape, and the second fastening portion is fitted into and fastened to the first fastening portion.

In an embodiment, the first fastening portion has a hook shape having one or more angles, and the second fastening portion comprises a through-hole, and the first fastening portion extends through and is fitted into and fastened to the second fastening portion.

In an embodiment, a method of manufacturing a busbar holder assembly comprises: forming a temperature sensor assembly by attaching an elastic member to an upper surface of a temperature sensor connecting portion of a circuit board to which a temperature sensor configured to measure a temperature of at least one battery cell is coupled and attaching a temperature sensor cover to an upper surface of the elastic member; providing the temperature sensor assembly above a busbar holder so that the temperature sensor assembly is received in a receiving hole provided in the busbar holder; and fastening a first fastening portion provided adjacent to the receiving hole of the busbar holder to a second fastening portion provided in the temperature sensor cover by pressing the temperature sensor assembly provided above the busbar holder in a direction of the busbar holder, wherein the circuit board is electrically connected to a plurality of busbars.

In an embodiment, the second fastening portion of the temperature sensor cover has a protruding shape, the first fastening portion has a recessed shape to receive the second fastening portion having the protruding shape, and the fastening comprises fitting the second fastening portion into the first fastening portion by pressing the temperature sensor assembly in the direction of the busbar holder.

In an embodiment, the second fastening portion comprises a stepped protruding hook, the first fastening portion has a shape of a stepped recess to receive the second fastening portion, and the fastening comprises fitting the second fastening portion into the first fastening portion by pressing the temperature sensor assembly in the direction of the busbar holder.

In an embodiment, the first fastening portion has a hook shape having one or more angles, the second fastening portion comprises a through-hole, and the fastening comprises causing the second fastening portion to extend through and be fitted into and fastened to the second fastening portion by pressing the temperature sensor assembly in the direction of the busbar holder.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A battery module (1) comprising:
battery cells (10);
busbars (40) electrically connecting the battery cells (10);
a circuit board (50) comprising a temperature sensor assembly (A), and electrically connected to the busbars (40); and
a busbar holder (30) for supporting the busbars (40), defining a receiving hole (310) for receiving the temperature sensor assembly (A), and comprising a first fastening portion (320) adjacent to the receiving hole (310),
wherein the temperature sensor assembly (A) comprises:
a temperature sensor (544) configured to measure a temperature of at least one of the battery cells (10);
a temperature sensor cover (546, 900) comprising a second fastening portion (610, 910) configured to be fastened to the first fastening portion (320); and
an elastic member (542) between the circuit board (50) and the temperature sensor cover (546, 900).

2. The battery module (1) as claimed in claim 1, wherein the temperature sensor assembly (A) is fixed to the busbar holder (30) via the first fastening portion (320) and the second fastening portion (610, 910).

3. The battery module (1) as claimed in claim 1 or 2, wherein the second fastening portion (610) has a protruding shape,
wherein the first fastening portion has a recessed shape corresponding to the protruding shape of the second fastening portion (610), such that the second fastening portion (610) is configured to be fitted into and fastened to the first fastening portion.

4. The battery module (1) as claimed in claim 3, wherein the second fastening portion (610) comprises a stepped protruding hook, and
wherein the first fastening portion has a shape of a stepped recess configured to receive the second fastening portion (610).

5. The battery module (1) as claimed in any one of the preceding claims, wherein the first fastening portion (320) has a hook shape having one or more angles,
wherein the second fastening portion (910) defines a through-hole, and
wherein the first fastening portion (320) is configured to extend through, to be fitted into, and to be fastened to the second fastening portion (910).

6. The battery module (1) as claimed in any one of the preceding claims, wherein the temperature sensor cover (546, 900) comprises a same material as the busbar holder (30).

7. The battery module (1) as claimed in any one of the preceding claims, wherein the temperature sensor cover (546, 900) is fixed to an upper surface of the elastic member (542) using adhesive (556).

8. The battery module (1) as claimed in any one of the preceding claims, wherein the temperature sensor cover (546, 900) comprises an injection molded material.

9. The battery module (1) as claimed in any one of the preceding claims, wherein the circuit board (50) comprises a flexible circuit board comprising a temperature-sensor-connecting portion (540),
wherein the temperature sensor assembly (A) further comprises a metal tab for contacting the temperature sensor (544) and the at least one of the battery cells (10), the metal tab (548) being fixed to a lower surface of the temperature-sensor-connecting portion (540) via an adhesive (552), and
wherein the elastic member (542) is fixed to an upper surface of the temperature-sensor-connecting portion (540) via an adhesive (554).

10. The battery module (1) as claimed in claim 9, wherein the elastic member (542) is pressed between the temperature sensor cover (546, 900) and the metal tab (548).

11. The battery module (1) as claimed in any one of the preceding claims, wherein the elastic member (542) defines a through-hole for receiving the temperature sensor (544) therethrough.

12. A method of manufacturing a busbar holder assembly, the method comprising:
forming a temperature sensor assembly (A) by attaching an elastic member (542) to an upper surface of a temperature-sensor-connecting portion (540) of a circuit board (50) that is coupled to a temperature sensor (544) configured to measure a temperature of at least one battery cell (10), and by attaching a temperature sensor cover (546, 900) to an upper surface of the elastic member (542);
providing the temperature sensor assembly (A) above a busbar holder (30) so that the temperature sensor assembly (A) is received in a receiving hole (310) defined by the busbar holder (30); and
fastening a first fastening portion (320), which is adjacent to the receiving hole (310) of the busbar holder (30), to a second fastening portion (610, 910) provided in the temperature sensor cover (546, 900) by pressing the temperature sensor assembly (A) in a direction of the busbar holder (30),
wherein the circuit board (50) is configured to be electrically connected to busbars (40).

13. The method as claimed in claim 12, wherein the second fastening portion (610) of the temperature sensor cover has a protruding shape,
wherein the first fastening portion has a recessed shape for receiving the second fastening portion (610), and
wherein the fastening comprises fitting the second fastening portion (610) into the first fastening portion by pressing the temperature sensor assembly (A) in the direction of the busbar holder (30).

14. The method as claimed in claim 12, wherein the second fastening portion (610) comprises a stepped protruding hook,
wherein the first fastening portion has a shape of a stepped recess for receiving the second fastening portion (610), and
wherein the fastening comprises fitting the second fastening portion (610) into the first fastening portion by pressing the temperature sensor assembly (A) in the direction of the busbar holder (30).

15. The method as claimed in any one of the claims 12 to 13, wherein the first fastening portion 320 has a hook shape having one or more angles,
wherein the second fastening portion (910) defines a through-hole, and
wherein the fastening comprises causing the second fastening portion (910) to extend through, to be fitted into, and to be fastened to, the second fastening portion (910) by pressing the temperature sensor assembly (A) in the direction of the busbar holder (30).
